# EUROPEAN PATENT APPLICATION

(11) **EP 1 244 016 A1**
(43) Date of publication of application: **25.09.2002**
(21) Application number: 01410029.1
(22) Date of filing: 23.03.2001
(51) Int. Cl.: G06F 11/34, G06F 17/60, G06F 17/30

(54) **User access pattern tracking of computer resources**

(71) Applicant: Hewlett-Packard Company, Palo Alto, CA 94304 (US)
(72) Inventor: Brebner, Gavin, 38410 Saint Martin d'Uriage (DE)
(74) Representative: Lloyd, Richard Graham

(57) **Abstract**

The invention relates to methods and apparatus for accumulating information about the resource access habits of a user. A preferred embodiment of the method uses tracer files or objects located on webpages. When a user requests the webpage resource, the image files are cached by the users browser. The images are arranged within the website hierarchy with specified latencies (expiry periods) and locations. Thus, in one embodiment, by tracking the GET requests, the contents of the users cache can be analyzed for the existence of the cached image files which betray the users movements through the website hierarchy. This data can be statistically analyzed to determine the browsing habits of the user. This information can be used to modify the content which is offered to the user on subsequent visits to the website resource. The information can also be used to provide data relating to the performance of the network as well as an indication of the access rates of various network resources. This data can be used to optimize the performance of the network.

## Description

### Technical Field

The present invention relates to methods and apparatus for monitoring and tracking the activities of a user interacting with resources on a network. More particularly, although not exclusively, the present invention relates to methods and apparatus for tracking the activities of a user when browsing the internet. The results of the tracking process can be used to improve the performance of network resources as well as monitor the activity of a user of the resources existing on the network in order to accumulate statistical data relating to the browsing habits of a user. Such statistical data can, for example, be used for marketing purposes in order to tailor offers of products and services to a user by means of webpage pre-configuration or function.

In an alternative and complimentary embodiment, the present invention relates to methods and apparatus for improving the performance of network resources as accessed by a user of the network. Examples of such improvements include increasing access speed, reducing download times for bandwidth intensive data and efficiently organizing availability of data resident on the network concerned.

### Background Art

A particularly suitable field of application for the present invention is in the context of the internet, in particular methods and apparatus for accessing web-resident resources via the world-wide-web (www).

It is noted that this exemplary application is not to be construed to be limiting. The techniques described in this specification may, with suitable modification, be applied to other types of network such as intranets, LANS and the like. The applicability of such architectures is essentially governed by how data resident on the network is accessed and this will be discussed in more detail below.

Given the rapid expansion of the web as a vehicle for commerce, it has been recognized that valuable data can be accumulated by tracking the movements or browsing history of a web user. This is particularly so in the case of a users interaction with commercial websites. The time that a user spends reviewing material can reveal substantial information about the users habits, preferences, demographic and potentially buying patterns. Recording the surfing habits of a user is analogous to monitoring a users likes/dislikes as they walk around a shopping mall looking at products.

It is known to use cookies to signify a web users particular use of a website resource. Briefly, cookies are small files that are sometimes downloaded onto a users machine when a user visits a website. Cookies can be used, when created as part of an interrogation or query process, to specify the identity of a user, their email address, interests etc. Generally, a user is completely unaware that a cookie has been stored on their machine as the transfer of the file is performed automatically and, by default in most browsers, without their active consent.

On subsequent visits to the same website, the webserver checks for the existence of a corresponding cookie on the users machine. The information stored in the cookie can be then used to identify the user and potentially tailor the websites content to the users preferences, tastes or needs. In the example of a portal website such as www.excite.com or www.yahoo.com customizing may take the form of presenting the user with his or her horoscope, news articles of particular interest, language preference and portal graphical layout.

Cookies can also be generated without any user input and simply record the fact that a user has visited a certain website or accessed a specific resource. Thus cookies can be used to crudely monitor or track the activity of a user of a client machine (or more correctly, the users of a particular client machine).

Although it is possible to configure a web browser to reject cookies, many users cannot or do not customize the functionality of their browser in this way. Therefore, cookies can be perceived as an invasion of privacy and, given that code is written to the users own machine, potentially a breach of the integrity of the users hardware.

Therefore cookie analysis is not an ideal method for collecting information about the browsing habits of a user.

Another technique is to use what are known as web-bugs. Here invisible images are placed on webpages effectively causing a hit on a particular site which includes the identification of the machine requesting the page. However, this technique may be used purely for tracking and cannot be used for personalization. Further, the step of machine identification can be defeated relatively easily by means of proxies.

There therefore exists a need to be able to collect demographic information as outlined above which does not involve the storage of files or data on a users machine. Preferably this analysis is performed in an acceptable manner with little perceived risk of invasion of privacy or compromise of a users hardware.

A further use of the information provided by cookies is in fine-tuning traffic flow in order to optimize internet connectivity. Monitoring traffic in this way can be used to increase the perceived speed of browsing as content can be pre-loaded based on a users previous browsing history, patterns and preferences.

It is an object of the present invention to provide methods and apparatus for effecting the collection of a browsing users habits, preferences, and history. It is a further object to provide methods and apparatus which allow the fine-tuning of a networked system based on an analysis of said users browsing habits.

### Disclosure of the Invention

In one aspect, the invention provides for a method of tracking a users access patterns in respect of computer resources accessed by the user, the method including the steps of:
- the user transmitting a resource request to a first computer;
- the first computer checking a first memory area for the existence of one or more cached first tracer files associated with the resource request;
- in response to the presence or absence of one or more of the first tracer files, compiling information about the resource request, wherein accumulated information relating to the existence or non-existence of the first tracer files provides information about the users access patterns.

The existence of one or more first tracer files in the first memory area is preferably the result of previous resource requests made by the user.

In a preferred embodiment, the first memory area is located on a client computer operated by the user.

Preferably, the first computer is a webserver.

In a preferred embodiment, the tracer files correspond to file objects which are adapted to be cached on the client computer and are configured to have a predetermined latency and/or identification.

The tracer files are preferably image files located on one or more HTML pages so that they can be automatically cached in accordance with the interaction between a users browser and the webserver.

Preferably, the file objects correspond to image files which are located and configured so as to be automatically cached when the user makes a corresponding resource request.

In a further aspect the invention provides for a method of collecting statistical data from which can be derived user browsing patterns, whereby the user makes a plurality of resource requests as hereinbefore defined, whereupon, a plurality of latency and identification information associated with the tracer files can be used to identify the characteristics of the users resource requests and the frequency with which those requests are made.

In a further aspect, the invention provides for a website hierarchy configured to incorporate tracer files located on or associated with one or more webpages, the webpages configured so that the tracer files are cached when corresponding HTML requests are made, wherein the caching latency of the tracer files is configured so that monitoring the caching activity during a series of HTML requests reveals information about the pattern of HTML requests made by a user.

The information accumulated by monitoring the presence, in the cache, of the tracer files, may be used to optimize resource and/or network usage by providing time dependant information about network and resource usage.

### Brief Description of the Drawings

The present invention will now be described by way of example only and with reference to the drawings in which:
- Figure 1:: illustrates a prior art technique for user tracking;
- Figure 2:: illustrates a caching process based on latency of images;
- Figure 3:: illustrates a website hierarchy showing resources accessed by a first user; and
- Figure 4:: illustrates a website hierarchy showing resources accessed by a second user.

### Best Mode for Carrying Out the Invention

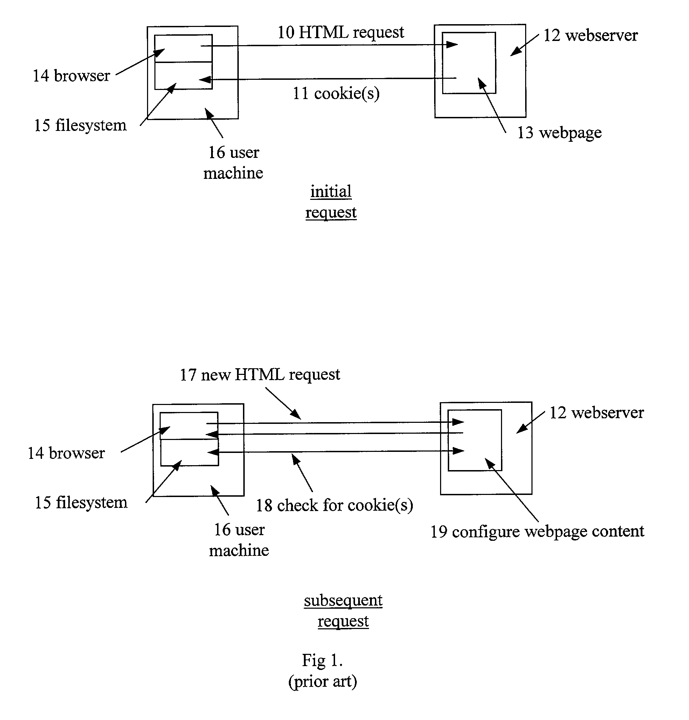

Figure 1 illustrates a prior art method of tracking the browsing history of a user. Specifically, the upper part of figure 1 illustrates, in a highly schematic form, a technique whereby a cookie is transferred to a users machine. According to the process shown in figure 1, a user (client) machine 16 connects to a webserver (server) 12. The client/server connection can be established by means of a dialup, network connection or similar.

According to the initial request part of figure 1, a user sends an HTML request 10 to a webserver 12. Such a request is usually in the form of a url (uniform record locator) and identifies the resource which the user wishes to access as well as the machine on which the resource resides. For brevity, it is noted that the structure of the webpages and HTML requests described herein will generally conform to the prevailing protocols at the time of application of the invention and will not be discussed in detail except where relevant to the present invention.

As shown in a highly schematic form in figure 1, a users machine includes a browser 14 and a file-system 15. From a users point of view, an HTML request 10 is transmitted to the webserver and the webpage 13 is transferred back to the users browser for display on the users machine 16. For the present discussion of prior art it is assumed that the webserver is configured to collect data about a user, for example his or her name and their preferred language. This data can be entered by means of an HTML dialog box. Once the accuracy of the data is confirmed, the information is compiled into one or more cookies which are then copied 11 to the users filesystem 15. According to this example, the cookie identifies the particular webserver which has been visited and the information which was sought on the users initial entry to the site.

The lower part of figure 1 illustrates the operation of a cookies on a users subsequent visits to the webserver 12. On a subsequent visit, the receipt of an appropriate HTML request causes the webserver 12 to check for the existence of a corresponding cookie on the users machine. Assuming that cookies have not been disabled, the webserver will locate 18 the cookie and use the information contained in the cookies to configure the webpage content which is pushed into the users browser. In the simple example described herein, this pre-configuration might take the form of customizing a greeting on the initial entry or index webpage and ensuring that the text is in the users preferred language.

The content of the cookies can vary depending on the degree of examination or questioning carried out during the users first visit. The data contained in the cookie may be relatively complex and include information sufficient to completely specify the format and content of a portal webpage. At the other extreme a cookie may simply record the fact of the users initial visit and specify the content or characteristics of the website on subsequent visits or divert the user to a different entry page.

As noted above, the creation and transfer of cookies to a users filesystem can be considered an invasion of privacy given that they proactively communicate information about the user, or the users browsing habits, to the webserver. This problem is compounded by the fact that the operation of cookies generally occurs by default and therefore without the positive consent of the user. Any substantive operation which involves writing data to the users hardware is usually viewed with suspicion.

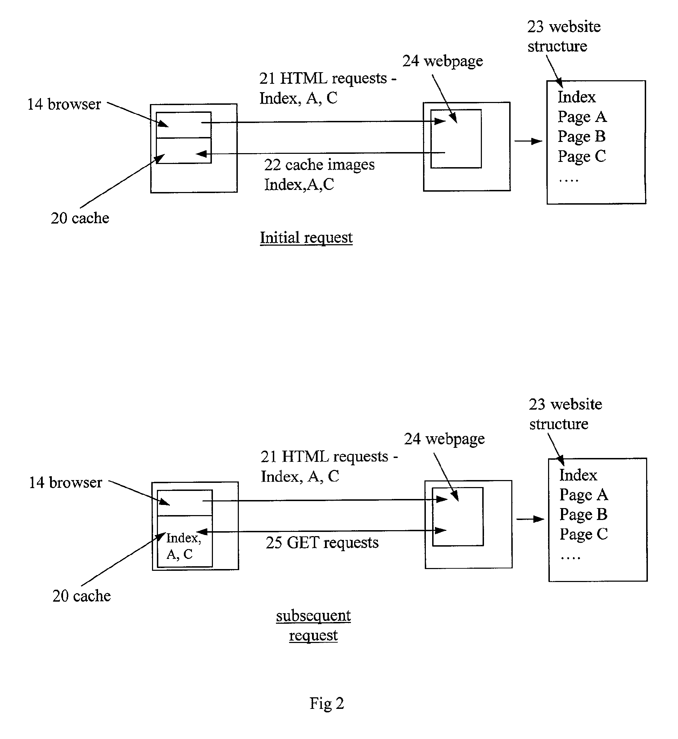

Figure 2 illustrates one embodiment of the present invention. At the users side, a client computer is shown in a highly schematic form and includes a browser 14 and a first memory area or cache 14. In the context of web-browsing, a cache operates in manner which is analogous to a disk cache which stores frequently accessed data in RAM so that the retrieval time for that data is substantially reduced in comparison to reading from disk. When a user accesses website resources, frequently accessed files such as image files such as webpage controls or graphics are downloaded and displayed via the browser. Resources such as graphics place a particularly heavy load on network resources as they are often very large and therefore take a long time to download and display. To ameliorate this problem, frequently accessed images are routinely cached locally on the users hard disk or other memory area, so that on subsequent visits, the graphics can be displayed by the browser substantially faster than if they were downloaded from the network each time the resource is required. This type of caching operation is very common. As such, cached images are viewed with rather less suspicion than files such as cookies and is usually considered part of a normal browser optimization procedure. Graphics generally carry no information other than the graphical data of which the user is aware anyway and are generally viewed as innocuous.

These characteristics are exploited in the present invention as follows. Referring to figure 2, during an initial visit to a webpage, a user transmits an HTML request 21 to a first computer or web-server. The website according to the invention is structured and formatted in a very specific way and one embodiment is described as follows.

Each of the pages of the website incorporates tracer files, such as objects or images, which are cached as part of the normal browsing process. For example, in a preferred embodiment, the site contains a series of objects such as single pixel images. The images are arranged so that they are each changed at predetermined times. That is, the images have specified latencies.

The enclosing page is made non-cacheable so that each time a user visits the webpage, their browser checks for the existence of the object (image) files in the cache. This may be done by using the "EXPIRES" meta-tag. For simplicity the following description will consider the case of three images located on an HTML page. The HTML page is configured to refer to a three single pixel images. The three images are arranged so that a first is changed every day, a second changed every week and a third changes every month.

The enclosing HTML page includes <img src= "filename" > statements which are used as the trigger to expect GETs for the images. The pattern of actual GETs provides information about the users browsing history by checking, where necessary, for the existence of the cached images in the users browser cache. The following table illustrates examples of GET patterns for day/week/month latency images and what they may indicate in terms of monitoring the browsing history of a user.

| **Day Image** | **Week Image** | **Month Image** | **Interpretation** |
|---|---|---|---|
| **Yes** | **Yes** | **Yes** | New user or cache has been cleared |
| No | Yes | Yes | Returning visitor. Perhaps same day of week as last week, month. |
| Yes | No | Yes | Returning visitor. Perhaps same week of month as last month |
| No | No | Yes | Returning visitor. Perhaps same day of week, and week of month as last month |
| **Yes** | **Yes** | **No** | Returning moderately frequent visitor; not the first visit this month. |
| No | Yes | No | Returning visitor; not the first visit this month. |
| **Yes** | **No** | **No** | First time today for a frequent visitor |
| **No** | **No** | **No** | Regular/daily visitor |

The rows in bold indicate cases whose interpretation is easier than the others. A "Yes, No, No" pattern, for example, indicates fairly clearly that it is a returning user, but one who hasn't visited the site today. Putting up a "welcome back, first time we've seen you today" message would probably be appropriate. The rows not in bold are less obvious in interpretation; the "No, Yes, Yes" pattern for example, indicates that the user has been there before, but not this week or month. If it is the beginning of the month this could be a relatively frequent visitor who was there the same day the previous week, or it could be a greater delay than this. In the cases where a day, week, and month system is used, the analysis would need to take into account the date with respect to these changeover periods. Depending upon the sophistication desired, greater or lesser analysis may be performed. The day, week, month model is intended as an example, and many different overlapping schemes can be imagined that would permit better identification of usage patterns.

It can be seen from the above that by monitoring the GETs of the HTML page, the absence of a particular cache download can indicate the users browsing habits and track usage of website resources. While a relatively simple example has been given above, the skilled reader will appreciate that by locating cacheable tracer files on specific webpages within the website hierarchy, data relating to the browsing habits of a user can be indirectly accumulated. The sensitivity of the data collection can be adjusted by configuring the latency of the cached images as well as their location and number. The movements of a user through the hierarchy of the website results in a "trail" being left in the form of GET requests which indicate the absence (or not) of cached images having different time-stamps and/or other means which can be used to identify the time at which the cache was checked for the presence of a particular cached image.

An example of this is shown in figure 2 (upper portion) where a users initial visit to a website results in tracking images corresponding to the Index page, page A and page B being cached. On subsequent visits, assuming that the visit is within the latency period for all of the images, the GET requests produce a yes/yes/yes result revealing that the user has visited the website within the latency period. It can be seen that if the images have a range of latency periods, the users browsing habits as a function of time can be determined.

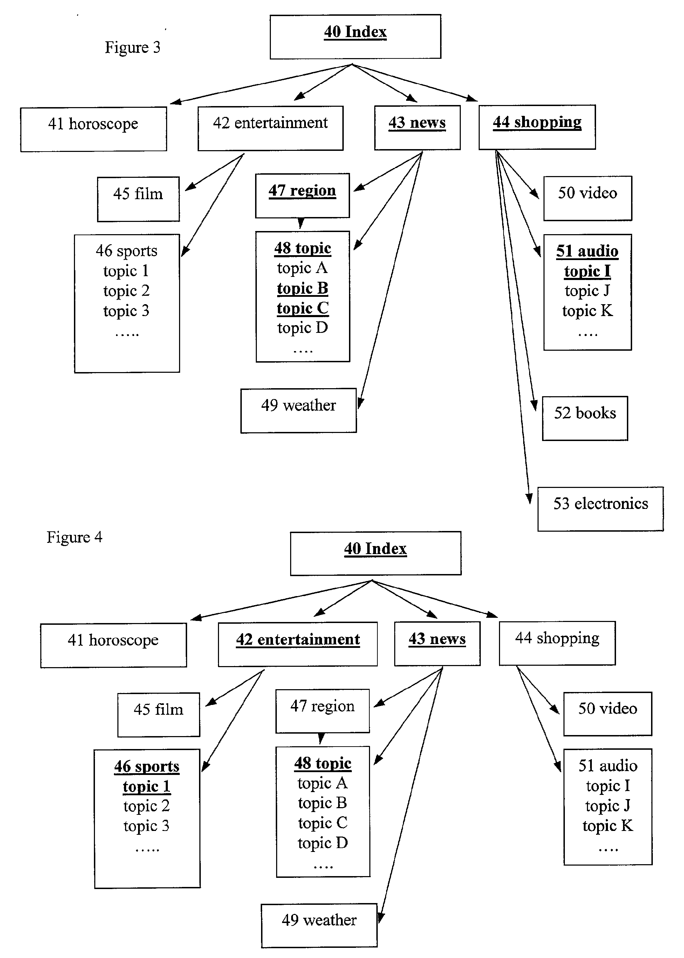

A slightly more complicated example is shown in figures 3 and 4 and is intended to illustrate browsing paths as opposed to time varying browsing. However, it is noted that the location and latency of the cached tracer files can be simultaneously monitored to give both tracking and timing information. Referring to figure 3, a first user browses a website hierarchy as follows. In the present case, it is assumed that the cached images have the same latency. The user initially enters the website via the index page 40. The web-server checks for the existence of the cache image in the users cache and thus it can be determined whether or not the user has previously accessed that page and over what period. The users movements through the website hierarchy can be indirectly monitored by checking for cached images from the news page 43 whereby the first user accesses and specifies his or her region of interest 47, and topics 48, topic B and topic C. The users interaction with the e-commerce based part of the website is then tracked by checking for cached images from the shopping entry page 44 and on to the audio purchase page 51 as well as others (topic I).

With careful selection and location of the images and their latency periods, over time repeated visits by a user to a particular website can reveal a substantial amount of information about the users interests, browsing habits, time spent web-surfing etc. Particular aspects of users interaction with the website hierarchy can be monitored by clustering cache images near nodes of the website tree structure and using a fine-grained approach to setting the time-based latency of the image caching.

Figure 4, illustrates the browsing habits of a second user whereby, after accessing the index page 40, the user browses entertainment 42, in particular sports 46 and subtopic 1 pages. The user also accesses news 43, but selects a different topic 48. Again, over time and repeated visits, data is accumulated which reflects the browsing habits of the second user. It can be seen that even after only a few visits to the website shown in figures 3 and 4, the two users can be differentiated by way of their browsing habits in terms of the content which they access and potentially the periods over which they visit and re-visit the website.

Given repeated visits a statistical profile can be accumulated for users which can include latency data which reflects the time between visits and time between visits to particular sections of the website hierarchy. The sensitivity of this data depends on the time or latency resolution of the images as well as their location. It is also possible that over time the website administrator may change the structure of the website in order to analyze changes in users browsing behaviour. It is also possible to envisage dynamic content creation based on tracking of cache access patterns.

Information relating to the browsing habits of a user also reflects usage patterns which can be used to modify or streamline resource availability on the network. This is an alternative and complimentary embodiment of the invention and can be used to adjust network parameters such as directing data flow and dealing with heavy server load for frequently accessed resources.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of tracking a users access patterns in respect of computer resources accessed by the user, the method including the steps of:
- the user transmitting a resource request to a first computer;
- the first computer checking a first memory area for the existence of one or more cached first tracer files associated with the resource request;
- in response to the presence or absence of one or more of the first tracer files, compiling information about the resource request, wherein accumulated information relating to the existence or non-existence of the first tracer files provides information about the users access patterns.

2. A method as claimed in claim 1 wherein the existence of the one or more first tracer files in the first memory area is the result of previous resource requests made by the user.

3. A method as claimed in claim 1 wherein the first memory area is located on a client computer operated by the user.

4. A method as claimed in claim 1 wherein the first computer is a webserver.

5. A method as claimed in claim 1 wherein the tracer files correspond to file objects which are adapted to be selectively cached on the client computer and are configured to have a predetermined latency and/or identification.

6. A method as claimed in claim 5 wherein the tracer files are image files located on one or more HTML pages so that they are automatically cached in accordance with the interaction between a users computers and the first computer.

7. A method as claimed in claim 1 wherein the file objects correspond to image files which are located and configured so as to be automatically cached when the user makes a corresponding resource request.

8. A method of collecting statistical data from which can be derived user browsing patterns, whereby the user makes a plurality of resource requests as hereinbefore defined, whereupon, a plurality of latency and identification information associated with the tracer files can be used to identify the characteristics of the users resource requests and the frequency with which those requests are made.

9. A website hierarchy configured to incorporate tracer files located on or associated with one or more webpages, the webpages configured so that the tracer files are cached when corresponding HTML requests are made, wherein the caching latency of the tracer files is configured so that monitoring the caching activity during the HTML requests reveals information about the pattern or patterns of HTML requests made by a user.

10. A computer or network of computers configured to operate in accordance the method as claimed in any one of claims 1 to 7.

11. A method of optimizing network resources and functionality including the steps of:
- a user transmitting a resource request to a first computer;
- the first computer checking a first memory area for the existence of one or more cached first tracer files associated with the resource request;
- in response to the presence or absence of one or more of the first tracer files, compiling information about the resource request, wherein accumulated information relating to the existence or non-existence of the first tracer files provides information about the users access patterns whereby the frequency with which various resources are accessed and the type of resources accessed can be used to optimize the network.

12. A method of optimizing network resources and functionality wherein the information accumulated by monitoring the presence, in the cache, of the tracer files, is be used to optimize resource and/or network usage by providing time dependant information about network and resource usage.
